(19) Europäisches Patentamt
European Patent Office
Office européen des brevets

(11) EP 3 708 627 A1

(12) **EUROPEAN PATENT APPLICATION**

(43) Date of publication:
**16.09.2020 Bulletin 2020/38**

(51) Int Cl.:
***C09J 7/10*** *(2018.01)* ***C09J 7/38*** *(2018.01)*
***C09J 7/40*** *(2018.01)*

(21) Application number: **20157673.3**

(22) Date of filing: **17.02.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.02.2019 JP 2019031687**

(71) Applicant: **Nitto Denko Corporation**
**Ibaraki-shi, Osaka 567-8680 (JP)**

(72) Inventors:
- **SUZUKI, Tatsuya**
  **Ibaraki-shi, Osaka 567-8680 (JP)**
- **NAKAYAMA, Junichi**
  **Ibaraki-shi, Osaka 567-8680 (JP)**

(74) Representative: **Müller-Boré & Partner**
**Patentanwälte PartG mbB**
**Friedenheimer Brücke 21**
**80639 München (DE)**

# (54) ROLL OF LAMINATE SHEET

(57) Provided is a roll of laminate sheet. The laminate sheet comprises a PSA layer, and first and second films laminated on first and second faces of the PSA layer. Of the first and second films, at least one is a release film and the release film has surface roughness with a maximum height (Rz) of 400 nm or less on the PSA layer side surface. Of the first and second films, at least one has surface roughness with a maximum height (Rz) of 400 nm or greater on the surface opposite from the PSA layer.

[Fig. 1]

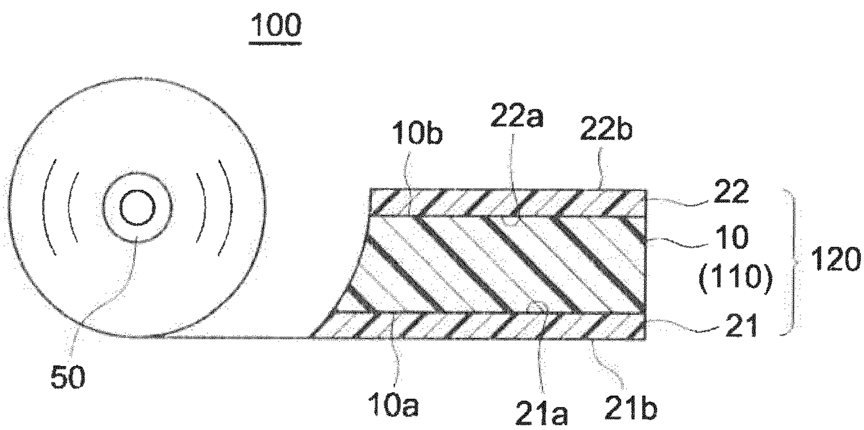




Printed by Jouve, 75001 PARIS (FR)

## Description

The present invention relates to a laminate sheet roll, in particular, to a roll of laminate sheet comprising a pressure-sensitive adhesive layer.

In general, pressure-sensitive adhesive (PSA) exists as a soft solid (a viscoelastic material) in a room temperature range and has a property to adhere easily to an adherend with some pressure applied. For such a property, PSA has been widely used in various industrial fields from home appliances to automobiles, OA equipment, and so on, typically in a form of a PSA sheet comprising a layer of the PSA. Technical documents related to PSA sheets include Japanese Patent No. 6300788.

From the standpoint of the productivity, handleability, convenience of storage and transportation, etc., it is desirable to obtain a PSA sheet in a wound form as a roll. Prior to use (i.e. before applied to an adherend), the PSA sheet can be processed, stored, distributed and so on as a laminate sheet in which a release liner is laminated to protect the adhesive face(s) of the PSA sheet; and therefore, it is also desirable to obtain the laminate sheet as a roll. Japanese Patent No. 6300788 relates to an adhesively double-faced PSA sheet (i.e., a PSA sheet that is adhesive on both sides) that is wound in a roll for storage; and with respect to the release film adhered to the first and second faces of the PSA layer, it suggests the use of film that has a highly smooth surface (in particular, a surface having an arithmetic average roughness Ra of 5 nm to 35 nm and a maximum peak height Rp of 50 nm to 400 nm) on the side opposite from the side touching (facing) the PSA layer, in order to prevent a plurality of minute irregularities from being generated on the surface of the PSA layer..

The present inventors have found, however, that with respect to such a laminate sheet in which the release film adhered to the PSA layer's two faces has a highly smooth surface on the reverse side of the PSA layer-facing side, its storage in a rolled state leads to a new problem, namely, occurrence of optical distortion in the PSA layer.

This invention thus relates to a laminate sheet roll with an objective to provide a roll such that the PSA layer in the laminate sheet is less likely to have optical distortion.

The present description provides a roll of laminate sheet (a laminate sheet roll). The laminate sheet comprises a PSA layer as well as first and second films laminated on first and second faces of the PSA layer. Of the first and second films, at least one is a release film. Of the first and second films, at least one has surface roughness with a maximum height (Rz) of 400 nm or greater on the surface (or "face B" hereinafter) on the opposite side from the PSA layer. The PSA layer-side surface (or "face A" hereinafter) of the release film has surface roughness with a maximum height (Rz) of 400 nm or less.

When the roll has a maximum height (Rz) of 400 nm or greater on the face B of at least the first or second film, optical distortion of the PSA layer can be suitably reduced. When at least one of the first and second films is a release film and the release film has a maximum height (Rz) of 400 nm or less on the face A, a highly smooth adhesive face is likely to be obtained. The adhesive face here refers to the surface of the PSA layer on which the release film is laminated in the laminate sheet, that is, the surface potentially applied to an adherend upon removal of the release film. For instance, the highly smooth adhesive face is advantageous in optical applications.

In some embodiments, the first and second films preferably have a total thickness of 70 μm or greater. The total thickness of 70 μm or greater can enhance the size stability and contribute to reduction of optical distortion in the PSA layer.

In some embodiments, the PSA layer preferably has a thickness of 30 μm or greater. The PSA layer having such a thickness is suited for reduction of optical distortion.

As the PSA for forming the PSA layer, an acrylic PSA can be preferably used. The acrylic PSA is likely to form a highly transparent PSA layer. The highly transparent PSA layer can be an advantageous feature, for instance, in optical applications.

The acrylic PSA comprises an acrylic polymer (typically as a component accounting for more than 50 % by weight). In some embodiments, the acrylic polymer can have a glass transition temperature (Tg) of -50 °C or above based on its monomer composition. As for the PSA layer formed from an acrylic PSA having such a composition, it is particularly meaningful to reduce optical distortion by applying the art disclosed herein.

Because of the reduce optical distortion in the PSA layer and the likelihood of obtaining a highly smooth adhesive face, the laminate sheet roll disclosed herein can be preferably used for producing an optical member having the PSA layer. The PSA-layer-bearing optical member (or the "adhesive optical member" hereinafter) can be preferably produced, for instance, by a method that includes unwinding the laminate sheet from the roll, peeling the release film off the laminate sheet to expose the adhesive face, and applying the adhesive face to an optical member as an adherend.

Fig. 1 shows a schematic cross-sectional diagram of the laminate sheet roll according to an embodiment.
Fig. 2 shows a schematic cross-sectional diagram of the laminate sheet roll according to another embodiment.

Preferred embodiments of the present invention are described below. Matters necessary to practice this invention other than those specifically referred to in this description can be understood by a person skilled in the art based on the disclosure about implementing the invention in this description and common general knowledge at the time of application. The present invention can be practiced based on the contents disclosed in this description and common technical knowledge in the subject field. In the drawings referenced below, a common reference numeral may be assigned to members or sites producing the same effects, and duplicated descriptions are sometimes omitted or simplified. The embodiments described in the drawings are schematized for clear illustration of the present invention, and do not necessarily represent the accurate size or reduction scale of an actual product provided.

As used herein, the term "PSA" refers to, as described earlier, a material that exists as a soft solid (a viscoelastic material) in a room temperature range and has a property to adhere easily to an adherend with some pressure applied. As defined in "Adhesion : Fundamental and Practice" by C. A. Dahlquist (McLaren & Sons (1966), P. 143), PSA referred to herein may be a material that has a property satisfying complex tensile modulus E* (1Hz) < $10^7$ dyne/$cm^2$ (typically, a material that exhibits the described characteristics at 25 °C).

The roll disclosed herein includes a laminate sheet in a wound state, the laminate sheet comprising a PSA layer and first and second films laminated on first and second faces of the PSA layer. Of the first and second films, at least one is a release film. The release film here refers to a film of which the face laminated onto the PSA layer is a releasable face (release face). Between the first and second films, both can be release films, or one can be a release film while the other is a non-releasable film. The laminate sheet disclosed herein can be used as a PSA sheet upon removal of the release film laminated on the PSA layer to expose the adhesive face. Thus, the laminate sheet disclosed herein can also be thought as a release-film-bearing PSA sheet that comprises a PSA sheet and a release film protecting an adhesive face of the PSA sheet.

Fig. 1 schematically illustrates the structure of the roll according to an embodiment.

Roll 100 shown in Fig. 1 includes a laminate sheet 120 in a roll wound around a core 50, laminate sheet 120 comprising a PSA layer 10 and first and second films 21 and 22 laminated, respectively, on first and second faces 10a and 10b of PSA layer 10. Face A 21a of first film 21 (i.e. the face laminated on PSA layer 10) is a release face having a release layer formed with, for instance, a silicone-based release agent. Similarly, face A 22a of second film 22 is also a release face. In other words, in this embodiment, first and second films 21 and 22 are both release films. PSA layer 10 in laminate sheet 20 constitutes an adhesively double-faced PSA sheet 110 of which first and second faces 10a and 10b can be used as adhesive faces.

Of face B 21b of first film 21 and face B 22b of second film 22, at least one has surface roughness with a maximum height (Rz) of 400 nm or greater. This can reduce the occurrence of optical distortion in PSA layer 10. One reason for such effect can be thought, for instance, as follows: In particular, roll 100 includes laminate sheet 120 in a wound state with face B 21b of first film 21 in contact (layered) with face B 22b of second film 22. In such roll 100, the tension for winding laminate sheet 120 to prepare roll 100 or for unwinding laminate sheet 120 from roll 100 and the expansion/contraction caused by internal stress or temperature changes in first and second films 21 and 22, etc., may generate stress that works to shift face B 21b of first film 21 in an in-plane direction relative to face B 22b of second film 22 in contact therewith. During this, when the first and second films lack sufficient slip properties between faces B 21b and 22b, the stress may be applied to PSA layer 10, possibly causing optical distortion in the PSA layer. When faces B 21b and 22b of the first and second films are both highly smooth, the slip properties between their faces B are likely to be insufficient. It is presumed that when at least one of faces B 21b and 22b has at least a certain level of surface roughness, the slip properties are enhanced between the faces B, reducing the occurrence of optical distortion in the PSA layer. The reason is, however, not limited to this.

In this embodiment, the release film's faces A (i.e. the faces A 21a and 22b of first and second films 21 and 22) preferably have surface roughness each with a maximum height (Rz) of 400 nm or less. According to such an embodiment, the first and second faces 10A and 10B are likely to have high smoothness suited for optical applications.

Fig. 2 schematically illustrates the structure of the roll according to another embodiment. Roll 200 shown in Fig. 2 includes a laminate sheet 220 in a roll wound around a core 50, laminate sheet 220 comprising a PSA layer 10 and first and second films 21 and 32 laminated, respectively, on first and second faces 10a and 10b of PSA layer 10. In this embodiment, face A 32a of second film 32 (i.e. the face laminated on PSA layer 10) is a non-releasable surface (non-release face). The second film in which the face laminated on the PSA layer is non-releasable as this can be thought as a support substrate of the PSA layer. PSA layer 10 is fixed to face A 32a of second film 32, that is, PSA layer 10 is provided not to be separated from second film 32. On the other hand, in this embodiment, face A 21a of first film 21 is a release face in the same manner as Fig. 1. In other words, in this embodiment, first film 21 is a release film and second film 32 is a support substrate. As a result, PSA layer in laminate sheet 220 and second film (support substrate) 32 are united to constitute an adhesively single-faced PSA sheet 210 of which first face 10a can be used as an adhesive face. Of faces B 21b and 32b of first and second films 21 and 32, at least one has surface roughness with a maximum height (Rz) of 400 nm or greater. This can reduce the occurrence of optical distortion in PSA layer 10. In this embodiment, the release films face A (i.e. face A 21a of first film 21) preferably has surface roughness with a maximum height (Rz) of 400 nm or less.

It is noted that while Fig 1 shows an example of roll 100 in a state where laminate sheet 120 is wound around core 50, roll 100 can be in a form free of core 50, that is, in a state where laminate sheet 120 is wound by itself, a so-called coreless roll form. The same is true with roll 200 shown in Fig. 2.

Figs. 1 and 2 show examples of PSA layer 10 having a monolayer structure, but the structure of PSA layer 10 is not limited to this. For instance, the PSA layer may be structured to include two or more sublayers formed of the same or different PSA. The PSA layer can be a substrate-containing PSA layer in which a non-releasable substrate is integrated (buried) between the first and second faces. As the substrate, plastic film, paper ,nonwoven fabric and the like can be used. From the standpoint of the productivity and transparency, a PSA layer free of a substrate integrated between the first and second faces (i.e. a substrate-free PSA layer) is preferable and a substrate-free PSA layer having a monolayer structure is more preferable.

<First and second films>

(Face B's maximum height (Rz))

In the laminate sheet forming the roll disclosed herein, of the first film's face B (or face 1B hereinafter) and the second film's face B (or face 2B hereinafter), at least one has surface roughness with a maximum height (Rz) of 400 nm or greater. This may bring about the effect to reduce the occurrence of optical distortion in the PSA layer of the laminate sheet constituting the roll. From the standpoint of enhancing the slip properties between the faces 1B and 2B, in some embodiments, the Rz of at least one of the faces 1B and 2B (the larger Rz when their Rz values are different) can be, for instance, 500 nm or greater, 600 nm or greater, 750 nm or greater, 1000 nm or greater, 1300 nm or greater, or even 1600 nm or greater. The maximum Rz value is not particularly limited. When both the faces 1B and 2B have excessively large Rz values, the slip properties may tend to degrade. Thus, in some embodiments, at least one of the faces 1B and 2B may have a Rz of, for instance, 10000 nm or less, 5000 nm or less, less than 3000 nm, less than 2500 nm, or even less than 2000 nm. From the standpoint of the ease of manufacturing and handling the first and second films, in some embodiments, the Rz of at least one (the smaller Rz) of the faces 1B and 2B can be, for instance, 50 nm or greater, 100 nm or greater, 150 nm or greater, 200 nm or greater, or even 250 nm or greater.

Here, the maximum height (Rz) in this description refers to the maximum height roughness value obtained, using a non-contact surface roughness analyzer unless otherwise noted. As the non-contact surface roughness analyzer, an optical interferometric surface roughness analyzer is used. For instance, Wyko NT-9100 available from Veeco or an equivalent product can be used. Specific operations and conditions of the measurement can be set according to the measurement conditions described later in the working examples or to obtain data equivalent or comparable to data obtained according to the measurement conditions. The maximum height (Rz) is determined as the sum of Rp and Rv in the roughness curve obtained by the surface roughness measurement, with Rp being the height of the highest peak above the mean line of the roughness curve and Rv being the depth of the deepest valley below the mean line.

The Rz values of faces 1B and 2B can be about the same or different. From the standpoint of effectively enhancing the slip properties between the faces B, in some embodiments, the Rz can be differentiated between the faces 1B and 2B. In such an embodiment, the difference in Rz between the faces 1B and 2B can be, for instance, 50 nm or greater, 100 nm or greater, 150 nm or greater, 250 nm or greater, or even 300 nm or greater. The difference in Rz between the faces 1B and 2B is usually suitably 5000 nm or less, possibly 3000 nm or less, 2000 nm or less, or even 1500 nm or less.

In some embodiments, the Rz of the face 1B or 2B (the smaller Rz when they differ in Rz) can be, for instance, less than 1500 nm, 1000 nm or less, 700 nm or less, 500 nm or less, 400 nm or less, or even 350 nm or less. For instance, in an embodiment where the first or second film is a support substrate (i.e. a film having a non-releasable face A), it is preferable that the face B of the support substrate has a small Rz from the standpoint of increasing the transparency of the single-faced PSA sheet that includes the PSA layer and the support substrate. In such an embodiment, the Rz of the support substrate's face B can be made smaller than that of the release film's face B. This can suitably prevent the PSA layer from having optical distortion caused by the rolled state of the laminate sheet that includes the single-faced PSA sheet while providing transparency to the single-faced PSA sheet.

(Release film)

In the art disclosed herein, of the first and second films forming the laminate sheet, at least one is a release film having a release face at least on the side (face A) to be laminated on the PSA layer. The release film has a maximum height (Rz) of 400 nm or less on the face A. This can provide a highly smooth adhesive face. In some embodiments, the Rz of the release film's face A can be 350 nm or less, 300 nm or less, 250 nm or less, 200 nm or less, or even 150 nm or less. From the standpoint of the ease of manufacturing and handling the release film, etc., in some embodiments, the Rz of the release film's face A can be, for instance, 50 nm or greater, 80 nm or greater, or even 100 nm or greater.

In an embodiment where the first film's face A (or face 1A hereinafter) and the second film's face A (or face 2A hereinafter) are both release faces, the Rz values can be similar or different between the faces 1A and 2A.

The release film is not particularly limited and can be suitably selected in accordance with the purpose. Non-limiting examples of usable release films include a release film having a release layer on a face of a release film substrate and a release film formed from a low-adhesive resin such as a fluoropolymer (polytetrafluoroethylene, etc.) and a polyolefinic resin (polyethylene, polypropylene, etc.)

As the release film disclosed herein, it is preferable to use a film having a release layer on a release film substrate. The release layer can be formed by subjecting the release film substrate to a surface treatment with a release agent. The release agent can be a known release agent such as silicone-based release agent, long-chain alkyl-based release agent, fluorine-based release agent and molybdenum(IV) sulfide. In an embodiment, it is preferable to use a release film having a release layer formed with a silicone-based release agent. The release layer's thickness and formation method are not particularly limited. They can be designed to provide adequate release properties to the release film's face A.

As the release film substrate, various types of plastic film can be used. In this description, the plastic film is typically a non-porous sheet and is conceptually distinct from the non-woven fabric (i.e. conceptually excludes the non-woven fabric).

Examples of the plastic film material include polyester-based resins such as polyethylene terephthalate (PET), polybutylene terephthalate (PBT) and polyethylene naphthalate (PEN); polyolefinic resins such as polyethylene (PE), polypropylene (PP), ethylene-propylene copolymer and ethylene-butene copolymer; cellulose-based resins such as triacetyl cellulose; acetate-based resins; polysulfone-based resins; polyether sulfone-based resins; polycarbonate-based resins; polyamide-based resins; polyimide-based resins; cyclic polyolefin resins such as norbornene-based resins; (meth)acrylic resins; polyvinyl chloride-based resins; polyvinylidene chloride-based resins; polystyrene-based resins; polyvinyl alcohol-based resins; ethylene-vinyl acetate copolymer resins; ethylene-vinyl alcohol copolymer resins; polyarylate-based resins; and polyphenylene sulfide-based resins. A release film substrate formed from one species or a mixture of two or more species among these resins can be used. A particularly preferable release film substrate is polyester-based resin film (e.g. PET film) formed from a polyester-based resin.

The thickness of the release film is not particularly limited. For instance, it can be about 10 μm to 500 μm. From the standpoint of the strength and size stability of the release film, its thickness is usually suitably 20 μm or greater, preferably 30 μm or greater, possibly 35 μm or greater, 40μm or greater, 45 μm or greater, 50 μm or greater, or even 65 μm or greater. From the standpoint of the handling properties (e.g. ease of winding) of the release film, etc., the thickness of the release film is usually suitably 300 μm or less, preferably 250 μm or less, possibly 200 μm or less, 150 μm or less, 130 μm or less, 110 μm or less, 90 μm or less, or even 70 μm or less.

(Support substrate)

In some embodiments of the art disclosed herein, at least one of the first and second films can be a non-releasable film, that is, a support substrate. As the support substrate, various types of plastic film can be used. The material forming the plastic film can be arbitrarily selected among the same materials as those exemplified as the plastic film material that can be used for the release film substrate. Examples of particularly preferable plastic film include polyester-based resin film, cellulose-based resin film, polyimide-based resin film and polyether sulfone-based resin film. Transparent plastic film is preferable. The face A of the support substrate can be subjected to surface treatment such as primer coating, corona discharge treatment and plasma treatment. The surface treatment may contribute to an increase in tightness of adhesion between the face A and PSA layer.

In the art disclosed herein, the plastic film used as the aforementioned support substrate or release film substrate may be a non-stretched film, uni-axially stretched film or bi-axially stretched film. The plastic film may have a monolayer structure or a multi-layer structure including two or more sublayers. The plastic film may include a known additive that can be used for support substrates or release film substrates of PSA sheets, such as antioxidant, anti-aging agent, heat resistant stabilizer, photostabilizer, UV ray absorber, colorant such as pigment and dye, slip agent, filler, antistatic agent, nucleating agent, etc. In a multi-layer plastic film, each additive can be added in each sublayer or in some sublayers.

The face A (non-release face) of the support substrate is not particularly limited in Rz. The Rz of the support substrate's face A can be, for instance, less than 1000 nm, 700 nm or less, or even 500 nm or less. From the standpoint of increasing the transparency of the single-faced PSA sheet which is the laminate sheet without the release film, in some embodiments, the Rz of the support substrate's face A can be, for instance, 400 nm or less, 350 nm or less, 300 nm or less, 250 nm or less, 200 nm or less, or even 150 nm or less. From the standpoint of the ease of manufacturing and handling the support substrate, etc., in some embodiments, the Rz of the support substrate's face A can be, for instance, 50 nm or greater, 80 nm or greater, or even 100 nm or greater. The Rz of the support substrate's face A can be comparable to or different from that of the release film's face A.

The thickness of the support substrate is not particularly limited and can be suitably selected in accordance

with the purpose. The support substrate's thickness can be, for instance, 2 μm or greater, 5 μm or greater, 10 μm or greater, 25 μm or greater, 30 μm or greater, or even 40 μm or greater. From the standpoint of the handling properties (e.g. ease of winding) of the support substrate, its thickness is usually suitably 500 μm or less, preferably 300 μm or less, possibly 200 μm or less, 150 μm or less, 130 μm or less, 110 μm or less, 90 μm or less, or even 70 μm or less.

(Total thickness of film)

In the art disclosed herein, the total thickness of the first and second films forming the laminate sheet is not particularly limited. From the standpoint of the ease of manufacturing and handling the laminate film, the total thickness is usually suitably about 20 μm or greater, preferably 35 μm or greater, or possibly 50 μm or greater. For the same reason, the total thickness is usually suitably about 1000 μm or less, preferably 800 μm or less, possibly 500 μm or less, 300 μm or less, 250 μm or less, 200 μm or less, or even 150 μm or less.

In some embodiments, the total thickness of the first and second films is preferably 70 μm or greater. This can enhance the size stability of the overall laminate sheet. For instance, the resistance to deformation caused by tension, shrinkage due to photo-curing or heating/drying of the PSA composition, etc., can be increased. By enhancing the size stability of the overall laminate sheet, the occurrence of optical distortion can be further reduced in the PSA layer. The total thickness is more preferably 78 μm or greater, possibly 80 μm or greater, 85 μm or greater, or even 90 μm or greater.

<PSA layer>

In the art disclosed herein, the type of PSA forming the PSA layer in the laminate sheet is not particularly limited. For example, the PSA layer may be constituted, comprising one, two or more species of PSA selected among various known species of PSA, such as an acrylic PSA, rubber-based PSA (natural rubber-based, synthetic rubber-based, their mixture-based, etc.), silicone-based PSA, polyester-based PSA, urethane-based PSA, polyether-based PSA, polyamide-based PSA, fluorine-based PSA, etc. Here, the acrylic PSA refers to a PSA comprising an acrylic polymer as the base polymer (the primary component among polymers, i.e. a component accounting for more than 50 % by mass). The same applies to the rubber-based PSA and other PSA. In a PSA layer preferable from the standpoint of the transparency, weatherability, etc., the acrylic PSA content is 50 % by weight or greater, more preferably 70 % by weight or greater, or yet more preferably 90 % by weight or greater. The acrylic PSA content can be greater than 98 % by weight, or the PSA layer may essentially consist of an acrylic PSA.

As used herein, the term "(meth)acrylate" comprehensively refers to acrylate and methacrylate. Similarly, the term "(meth)acryloyl" comprehensively refers to acryloyl and methacryloyl while the term "(meth)acryl" comprehensively refers to acryl and methacryl.

In this description, the acrylic polymer refers to a polymer that comprises a (meth)acrylic monomer as a monomeric component constituting the acrylic polymer. In other words, it refers to a polymer comprising a monomer unit derived from a (meth)acrylic monomer. Herein, the (meth)acrylic monomer refers to a monomer having at least one (meth)acryloyl group per molecule.

Although not particularly limited to, in an embodiment of the art disclosed herein, the PSA layer can be preferably prepared, using a PSA composition that comprises monomeric components that constitute the acrylic polymer. Hereinafter, such a PSA composition may be referred to as an "acrylic PSA composition." Herein, the term "monomeric components that constitute an acrylic polymer" refers to monomeric components constituting the acrylic polymer in the PSA obtained from the acrylic PSA composition. In the acrylic PSA composition, the monomeric components may be included as unreacted monomers (i.e. as starting monomers whose polymerizable functional groups are unreacted), in a polymerized form (i.e. as a monomer unit), or in both forms.

<Monomeric Component>

In an embodiment of the art disclosed herein, the PSA layer can be formed with a PSA composition comprising as a monomeric component constituting the acrylic polymer, a component (A) described below. In a preferable embodiment, the PSA layer can be preferably formed with an acrylic PSA composition that comprises at least the component (A) as a monomeric component constituting the acrylic polymer and further comprises, as necessary, one or each of components (B) and (C) described below.

(Component (A))

The component (A) is an alkyl (meth)acrylate having an alkyl group with 2 to 18 carbons at the ester end. Hereinafter, an alkyl (meth)acrylate having an alkyl group with a number of carbons ranging from X up to Y at the ester end may be represented by "$C_{X-Y}$ alkyl (meth)acrylate." The structure of $C_{2-18}$ alkyl group in the $C_{2-18}$ alkyl (meth)acrylate

is not particularly limited. The alkyl group can be either a straight chain or a branched chain. For the component (A), these $C_{2-18}$ alkyl (meth)acrylates can be used singly as one species or in combination of two or more species.

Examples of a $C_{2-18}$ alkyl (meth)acrylate having a straight-chain alkyl group at the ester end include ethyl (meth)acrylate, n-propyl (meth)acrylate, n-butyl (meth)acrylate, n-pentyl (meth)acrylate, n-hexyl (meth)acrylate, n-heptyl (meth)acrylate, n-octyl (meth)acrylate, n-nonyl (meth)acrylate, n-decyl (meth)acrylate, n-undecyl (meth)acrylate, n-dodecyl (meth)acrylate, n-tridecyl (meth)acrylate, n-tetradecyl (meth)acrylate, n-pentadecyl (meth)acrylate, n-hexadecyl (meth)acrylate, n-heptadecyl (meth)acrylate, and n-octadecyl (meth)acrylate. Examples of a $C_{3-18}$ alkyl (meth)acrylate having a branched alkyl group at the ester end include isopropyl (meth)acrylate, tert-butyl (meth)acrylate, isobutyl (meth)acrylate, isopentyl (meth)acrylate, tert-pentyl (meth)acrylate, neopentyl (meth)acrylate, isohexyl (meth)acrylate, isoheptyl (meth)acrylate, 2-ethylhexyl (meth)acrylate, isooctyl (meth)acrylate, isononyl (meth)acrylate, isodecyl (meth)acrylate, 2-propylheptyl (meth)acrylate, isoundecyl (meth)acrylate, isododecyl (meth)acrylate, isotridecyl (meth)acrylate, isomyristyl (meth)acrylate, isopentadecyl (meth)acrylate, isohexadecyl (meth)acrylate, isoheptadecyl (meth)acrylate, and isostearyl (meth)acrylate. The art disclosed herein can be preferably implemented in an embodiment where the component (A) comprises one, two or more species selected from $C_{4-9}$ alkyl acrylates. Preferable examples of $C_{4-9}$ alkyl acrylates include n-butyl acrylate, 2-ethylhexyl acrylate, isooctyl acrylate and isononyl acrylate.

(Component (B))

The component (B) is an alicyclic monomer. The component (B) is typically used in combination with the component (A) and may contribute to increases in cohesion, transparency and heat resistance of the PSA, etc.

As the alicyclic monomer, any monomer having an alicyclic structure-containing group as well as an unsaturated double bond-containing polymerizable functional group such as a (meth)acryloyl group or a vinyl group may be used without limitations. For the component (B), these alicyclic monomers can be used singly as one species or in combination of two or more species. As used herein, the term "alicyclic structure-containing group" refers to a moiety having at least one alicyclic structure. The term "alicyclic structure" refers to a carbocyclic ring structure which may be saturated or unsaturated, but may not be aromatic. In this description, the alicyclic structure-containing group may be simply referred to as "alicyclic group." Preferable examples of the alicyclic group include a hydrocarbon group and a hydrocarbon-oxy group each having an alicyclic structure.

In the art disclosed herein, preferable alicyclic monomers include an alicyclic (meth)acrylate having an alicyclic group and a (meth)acryloyl group. Specific examples of alicyclic (meth)acrylates include cyclopropyl (meth)acrylate, cyclobutyl (meth)acrylate, cyclopentyl (meth)acrylate, cyclohexyl (meth)acrylate, cycloheptyl (meth)acrylate, cyclooctyl (meth)acrylate, isobornyl (meth)acrylate, and dicyclopentanyl (meth)acrylate as well as HPMPA, TMA-2 and HCPA represented by the formulas shown below.

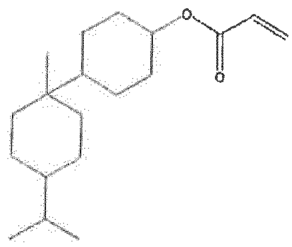
,
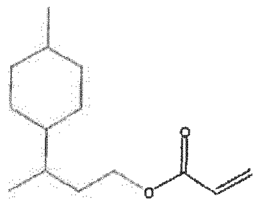
,
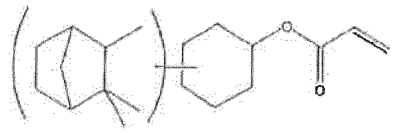

HPMPA TMA−2 HCPA

There are no particular limitations to the number of carbons of the alicyclic group in the alicyclic monomer (in an alicyclic (meth)acrylate, the number of carbons in the alicyclic (meth)acrylate excluding the (meth)acryloyl group). For instance, an alicyclic monomer whose alicyclic group has 4 to 24 (preferably 5 to 18, more preferably 5 to 12) carbons can be used. In particular, cyclohexyl acrylate (CHA), cyclohexyl methacrylate, isobornyl acrylate (IBXA) and isobornyl methacrylate are preferable. CHA and IBXA are more preferable while CHA is particularly preferable.

(Component (C))

The component (C) is a monomer having at least either a hydroxyl group or a carboxyl group.

As the hydroxyl group-containing monomer, any species having a hydroxyl group as well as an unsaturated double bond-containing polymerizable functional group, such as a (meth)acryloyl group or a vinyl group can be used without particular limitations. For the hydroxyl group-containing monomer, solely one species or a combination of two

or more species can be used. Examples of the hydroxyl group-containing monomer include hydroxyalkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, and 12-hydroxylauryl (meth)acrylate; and hydroxyalkylcycloalkane (meth)acrylates such as (4-hydroxymethylcyclohexyl)methyl (meth)acrylate. Other examples include hydroxyethyl(meth)acrylamide, allyl alcohol, 2-hydroxyethyl vinyl ether, 4-hydroxybutyl vinyl ether, diethylene glycol monovinyl ether, etc. Among these, hydroxyalkyl (meth)acrylates are preferable. For instance, a hydroxyalkyl (meth)acrylate having a hydroxyalkyl group of 2 to 6 carbons can be preferably used. In a preferable embodiment, as the hydroxyl group-containing monomer, one, two or more species can be selected and used from 2-hydroxyethyl acrylate (HEA), 2-hydroxyethyl methacrylate, 4-hydroxybutyl acrylate (4HBA) and 4-hydroxybutyl methacrylate. In some preferable embodiments of the art disclosed herein, the hydroxyl group-containing monomer used can be solely 4HBA, solely HEA, or a combination of 4HBA and HEA.

As the carboxyl group-containing monomer, any monomer having a carboxyl group and an unsaturated double bond-containing polymerizable functional group such as a (meth)acryloyl group or a vinyl group may be used without particular limitations. Carboxyl group-containing monomers can be used singly as one species or in combination of two or more species. Examples of the carboxyl group-containing monomer include ethylenic unsaturated monocarboxylic acids such as acrylic acid, methacrylic acid, crotonic acid, carboxyethyl (meth)acrylate, carboxypentyl (meth)acrylate, etc.; and ethylenic unsaturated dicarboxylic acids such as itaconic acid, maleic acid, fumaric acid, citraconic acid, etc.; as well as metal salts (e.g. alkali metal salts) of these; anhydrides of the ethylenic unsaturated dicarboxylic acids such as maleic anhydride, itaconic anhydride, etc.; and the like. Among these, acrylic acid and methacrylic acid are preferable, and acrylic acid is particularly preferable.

The art disclosed herein can be preferably implemented in an embodiment where the component (C) comprises a hydroxyl group-containing monomer. In other words, it is preferable that the component (C) either consists of a hydroxyl group-containing monomer or comprises a hydroxyl group-containing monomer and a carboxyl group-containing monomer. When the component (C) comprises a hydroxyl group-containing monomer and a carboxyl group-containing monomer, the hydroxyl group-containing monomer content in the entire component (C) is preferably greater than about 50 % by weight, or more preferably about 80 % by weight or greater (e.g. about 90 % by weight or greater). It is preferable to increase the hydroxyl group-containing monomer content in the component (C) from the standpoint of reducing metal corrosion caused by the carboxyl group, etc. The art disclosed herein can be preferably implemented in an embodiment where the monomeric components are essentially free of a carboxyl group-containing monomer. For instance, the carboxyl group-containing monomer content in the monomeric components can be less than about 1 % by weight, preferably less than about 0.5 % by weight, or more preferably less than about 0.2 % by weight.

The ratio (content) of component (A) to all monomeric components is not particularly limited. From the standpoint of providing suitable cohesion to the PSA, the component (A) content is usually suitably about 90 % by weight or less, preferably about 85 % by weight or less, or yet more preferably about 70 % by weight or less. In a preferable embodiment, the component (A) content can be about 60 % by weight or less (or even about 50 % by weight or less, e.g. about less than 50 % by weight). From the standpoint of the initial adhesiveness to an adherend, etc., the component (A) content is preferably about 30 % by weight or greater, or more preferably about 35 % by weight or greater. In an embodiment, the ratio of component (A) to all monomeric components can be, for instance, about 30 to 70 % by weight.

When the monomeric components include a component (B), the ratio (content) of component (B) to all monomeric components is not particularly limited. In view of the balance of adhesive properties, the component (B) content is usually suitably about 3 % by weight or greater, preferably about 5 % by weight or greater, or more preferably about 8 % by weight or greater (e.g. about 10 % by weight or greater). From the standpoint of the initial adhesion to an adherend, etc., the component (B) content is suitably about 65 % by weight or less, preferably about 60 % by weight or less, or more preferably about 55 % by weight or less (or even about 50 % by weight or less, e.g. less than about 50 % by weight). In a preferable embodiment, the ratio of component (B) to all monomeric components can be about 15 % by weight or greater, about 20 % by weight or greater, about 25 % by weight or greater, or even about 30 % by weight or greater (e.g. about 35 % by eight or greater). In an embodiment, the ratio of component (B) to all monomeric components can be, for instance, about 20 to 50 % by weight.

When the monomeric components include a component (C), the ratio (content) of component (C) to all monomeric components is not particularly limited. From the standpoint of the initial adhesion to an adherend, etc., the component (C) content is typically about 3 % by weight or greater, preferably about 5 % by weight or greater, or more preferably about 8 % by weight or greater (e.g. about 10 % by weight or greater). From the standpoint of providing suitable cohesion to the PSA, the component (C) content is usually preferably about 35 % by weight or less, more preferably about 30 % by weight or less, or even more preferably about 25 % by weight or less. In an embodiment, the component (C) content can be, for instance, about 15 to 30 % by weight.

(Optional Monomer)

The monomeric components in the art disclosed herein may comprise other monomer(s) (or "optional monomer(s)" hereinafter) in addition to the component (A), component (B) and component (C).

Examples of these optional monomers include heterocyclic monomers such as a cyclic nitrogen-containing monomer, a cyclic ether group-containing monomer, etc. Similar to the component (B), such a heterocyclic monomer can contribute to increases in cohesion, transparency and heat resistance of the PSA. It may also contribute to increase the adhesive strength and cohesive strength of the PSA. Heterocyclic monomers can be used solely as one species or in combination of two or more species.

Any monomer having a cyclic nitrogen-containing structure and an unsaturated double bond-containing polymerizable functional group such as a (meth)acryloyl group or a vinyl group may be used without limitations as the cyclic nitrogen-containing monomer. The cyclic nitrogen-containing structure preferably has a nitrogen atom in the ring structure. Examples of the cyclic nitrogen-containing monomer include vinyl lactam monomers such as N-vinylpyrrolidone, N-vinyl-ε-caprolactam, methylvinylpyrrolidone, etc.; oxazoline group-containing monomers such as 2-vinyl-2-oxazoline, 2-vinyl-5-methyl-2-oxazoline, 2-isopropenyl-2-oxazoline, etc.; nitrogen-containing heterocyclic vinyl monomers such as vinylpyridine, vinylpiperidone, vinylpyrimidine, vinylpiperazine, vinylpyrazine, vinylpyrrole, vinylimidazole, vinylmorpholine, etc.; and the like. The cyclic nitrogen-containing monomer may also be a (meth)acrylic monomer having a nitrogen-containing heterocyclic ring such as a morpholine ring, a piperidine ring, a pyrrolidine ring, a piperazine ring, an aziridine ring, etc. Specific examples include N-acryloyl morpholine, N-acryloyl piperidine, N-methacryloyl piperidine, N-acryloyl pyrrolidine, N-acryloyl aziridine, etc. Among them, vinyl lactam monomers are preferable in view of cohesiveness, and N-vinylpyrrolidone is particularly preferable.

Any monomer having a cyclic ether group such as an epoxy group or an oxetane group as well as an unsaturated double bond-containing polymerizable functional group such as a (meth)acryloyl group or a vinyl group may be used without limitations as the cyclic ether group-containing monomer. Examples of the epoxy group-containing monomer include glycidyl (meth)acrylate, 3,4-epoxycyclohexylmethyl (meth)acrylate, and 4-hydroxybutyl (meth)acrylate glycidyl ether. Examples of the oxetane group-containing monomer include 3-oxetanylmethyl (meth)acrylate, 3-methyl-oxetanylmethyl (meth)acrylate, 3-ethyl-oxetanylmethyl (meth)acrylate, 3-butyl-oxetanylmethyl (meth)acrylate, and 3-hexyl-oxetanylmethyl (meth)acrylate.

Other examples of the optional monomers include an alkyl (meth)acrylate that does not belong to the component (A), that is, an alkyl (meth)acrylate having an alkyl group with a single carbon or 19 or more (e.g. 19 to 24) carbons. Specific examples of such an alkyl (meth)acrylate include methyl (meth)acrylate, n-nonadecyl (meth)acrylate, isononadecyl (meth)acrylate, n-eicosyl (meth)acrylate, isoeicosyl (meth)acrylate, etc. These can be used singly as one species or in combination of two or more species.

Other examples of the optional monomer include a monomer having a functional group that is neither a hydroxyl group nor a carboxyl group. Such a functional group-containing monomer can be used to introduce crosslinking points in the acrylic polymer or to increase the cohesive strength of acrylic polymer. Examples of such a functional group-containing monomer include amide group-containing monomers such as (meth)acrylamide, N,N-dimethyl(meth)acrylamide, N-methylol(meth)acrylamide, etc.; cyano group-containing monomers such as acrylonitrile, methacrylonitrile, etc.; sulfonic acid group-containing monomers such as styrene sulfonic acid, allyl sulfonic acid, 2-(meth)acrylamido-2- methylpropanesulfonic acid, etc.; phosphoric acid group-containing monomers such as 2-hydroxyethyl acryloyl phosphate, etc.; keto group-containing monomers such as diacetone (meth)acrylamide, diacetone (meth)acrylate, vinyl methyl ketone, vinyl acetoacetate, etc.; isocyanate group-containing monomers such as 2-(meth)acryloyloxyethyl isocyanate, etc.; alkoxyl group-containing monomers such as methoxyethyl (meth)acrylate, ethoxyethyl (meth)acrylate, etc.; alkoxysilyl group-containing monomers such as (3-(meth)acryloxypropyl)trimethoxysilane, (3-(meth)acryloxypropyl)triethoxysilane, etc.; and the like. These can be used singly as one species or in combination of two or more species.

To adjust the acrylic polymer's Tg or to increase the cohesive strength, etc., the monomeric components in the art disclosed herein may comprise, as the optional monomer, a monomer that is copolymerizable with the components (A), (B) and (C) other than those listed above. Examples of such a copolymerizable monomer include carboxylic acid vinyl esters such as vinyl acetate, vinyl propionate, etc.; aromatic vinyl compounds such as styrene, substituted styrenes (α-methylstyrene, etc.), vinyl toluene, etc.; aromatic ring-containing (meth)acrylates such as aryl (meth)acrylate (e.g. phenyl (meth)acrylate), aryloxyalkyl (meth)acrylate (e.g. phenoxyethyl (meth)acrylate), arylalkyl (meth)acrylate (e.g. benzyl (meth)acrylate), etc.; olefinic monomers such as ethylene, propylene, isoprene, butadiene, isobutylene, etc.; chlorine-containing monomers such as vinyl chloride, vinylidene chloride, etc.; vinyl ether-based monomers such as methyl vinyl ether, ethyl vinyl ether, etc.; a macromonomer having a radically polymerizable vinyl group at the monomer end in a vinylic polymer; and the like. These can be used singly as one species or in combination of two or more species.

The amounts of these optional monomers used are not particularly limited and can be suitably selected. Usually, the total amount of optional monomers used is suitably less than about 50 % by weight of the monomeric components, preferably about 30 % by weight or less, or more preferably about 20 % by weight or less. The art disclosed herein can

be preferably implemented in an embodiment where the total amount of optional monomers used is about 10 % by weight or less (e.g. about 5 % by weight or less) of the monomeric components. When using an optional monomer, from the standpoint of suitably bringing about the effect to increase the adhesive strength or cohesive strength, the amount of the optional monomer used is suitably about 0.5 % by weight or more of the monomeric components, or preferably about 0.8 % by weight or more. The art disclosed herein can be preferably implemented also in an embodiment using essentially no optional monomers (e.g. an embodiment where the amount of optional monomer(s) used is about 0.3 % by weight or less of the monomeric components, or typically about 0.1 % by weight or less).

The component (A), component (B), component (C) and optional monomers described above are typically monofunctional monomers. Besides these monofunctional monomers, for increasing the cohesion of the PSA layer and adjusting its storage modulus, etc., the monomeric components can comprise a suitable amount of a polyfunctional monomer as necessary. As used herein, the monofunctional monomer refers to a monomer having a single polymerizable functional group (typically a radically polymerizable functional group) having an unsaturated double bond, such as a (meth)acryloyl group or a vinyl group. On the other hand, the polyfunctional monomer refers to a monomer having at least two such polymerizable functional groups as described later.

(Polyfunctional Monomer)

The polyfunctional monomer has at least two polymerizable functional groups (radically polymerizable functional groups in typical) having unsaturated double bonds, such as (meth)acryloyl group, vinyl group, etc. Examples of the polyfunctional monomer include an ester of a polyol and a (meth)acrylic acid such as ethylene glycol di(meth)acrylate, propylene glycol di(meth)acrylate, polyethylene glycol di(meth)acrylate, polypropylene glycol di(meth)acrylate, neopentyl glycol di(meth)acrylate, pentaerythritol di(meth)acrylate, pentaerythritol tri(meth)acrylate, dipentaerythritol hexa(meth)acrylate, 1,2-ethyleneglycol di(meth)acrylate, 1,4-butanediol di(meth)acrylate, 1,6-hexanediol di(meth)acrylate, 1, 12-dodecanediol di(meth)acrylate, trimethylolpropane tri(meth)acrylate, tetramethylolmethane tri(meth)acrylate, etc.; allyl (meth)acrylate, vinyl (meth)acrylate, divinylbenzene, epoxy acrylate, polyester acrylate, urethane acrylate, and the like. Among them, preferable examples are trimethylolpropane tri(meth)acrylate, 1,6-hexanediol di(meth)acrylate, and dipentaerythritol hexa(meth)acrylate. A particularly preferable example is 1,6-hexanediol diacrylate (HDDA). The polyfunctional monomers can be used solely as one species or in combination of two or more species. From the standpoint of the reactivity, etc., it is usually preferable to use a polyfunctional monomer having two or more acryloyl groups.

The amount of the polyfunctional monomer used is not particularly limited. It can be set to suitably achieve the purpose of use of the polyfunctional monomer. In some embodiments, the polyfunctional monomer can be used in an amount of preferably about 3% by weight or less, more preferably 2% by weight or less, or even more preferably about 1% by weight or less (e.g. about 0.5 % by weight or less) of the monomeric components. When using a polyfunctional monomer, its lower limit of use should just be greater than 0 % by weight and is not particularly limited. In typical, the amount of polyfunctional monomer used is suitably about 0.001 % by weight or greater (e.g. about 0.01 % by weight or greater) of the monomeric components.

Although not particularly limited, the combined components (A), (B) and (C) content in all the monomeric components is typically greater than about 50 % by weight, preferably about 70 % by weight or greater, more preferably about 80 % by weight or greater, or yet more preferably about 90 % by weight or greater. The art disclosed herein can be preferably implemented in an embodiment where their combined content is about 95 % by weight or greater (e.g. about 99 % by weight or greater). Their combined content can be 100 % by weight. The art disclosed herein can be preferably implemented in an embodiment where their combined content accounts for 99.999 % by weight or less (e.g. 99.99 % by weight or less) of the monomeric components.

The Tg of the copolymer corresponding to the composition of the monomeric components is not particularly limited. For instance, it can be about -70 °C or above. With increasing Tg of the copolymer, it tends to be difficult to later cancel optical distortion once it occurs in the PSA layer. Accordingly, it is particularly significant to reduce the occurrence of optical distortion by applying the art disclosed herein. On the other hand, a high Tg of the copolymer can be advantageous in increasing the PSA layer's cohesion. In some embodiments, the copolymer's Tg is suitably about -55 °C or above, preferably about -50 °C or above, or more preferably about -45 °C or above. The art disclosed herein can be preferably implemented also in an embodiment where the copolymer's Tg is about -40 °C or above (e.g. about -35 °C or above) or even -30 °C or above. The copolymer's Tg is usually suitably about 0 °C or below. From the standpoint of the adhesion and low-temperature properties of the PSA sheet, etc., it is preferably about -10 °C or below. In some embodiments, the copolymer's Tg can be about -15 °C or below, or even -20 °C or below. The art disclosed herein can be preferably implemented, for instance, in an embodiment where the copolymer's Tg is about -30 °C or above and about -10 °C or below.

The Tg of the copolymer corresponding to the composition of the monomeric components herein refers to the value determined by the Fox equation based on the composition of the monomeric components. As shown below, the Fox equation is a relational expression between the Tg of a copolymer and glass transition temperatures Tgi of homopolymers of the respective monomers constituting the copolymer.

$$1/Tg = \Sigma(Wi/Tgi)$$

In the Fox equation above, Tg represents the glass transition temperature (unit: K) of the copolymer, Wi the weight fraction (copolymerization ratio by weight) of a monomer i in the copolymer, and Tgi the glass transition temperature (unit: K) of homopolymer of the monomer i. In this description, Tg values are determined based on only monofunctional monomers. Accordingly, when the monomeric components include a polyfunctional monomer, the combined amount of monofunctional monomers in the monomeric components is counted as 100 % by weight, and the Tg value is determined based on the Tg values of homopolymers of the respective monofunctional monomers and the weight fractions of the monofunctional monomers relative to their combined amount.

As the glass transition temperatures of homopolymers used for determining the Tg value, values found in publicly known documents are used. For example, with respect to the monomers listed below, as the glass transition temperatures of homopolymers of the monomers, the following values are used:

| | |
|---|---|
| n-Butyl acrylate | -55 °C |
| 2-Ethylhexyl acrylate | -70 °C |
| Cyclohexyl acrylate | 15 °C |
| Isobornyl acrylate | 94 °C |
| 2-Hydroxyethyl acrylate | -15 °C |
| 4-Hydroxybutyl acrylate | -40 °C |
| Acrylic acid | 106 °C |
| Methacrylic acid | 228 °C |

With respect to the glass transition temperatures of homopolymers of monomers other than those listed above, values given in "Polymer Handbook" (3rd edition, John Wiley & Sons, Inc., Year 1989) are used. When the literature provides two or more values for a certain monomer, the highest value is used.

With respect to monomers for which no glass transition temperatures of the corresponding homopolymers are given in the "Polymer Handbook", values obtained by the following measurement method are used (see Japanese Patent Application Publication No. 2007-51271). In particular, to a reaction vessel equipped with a thermometer, a stirrer, a nitrogen inlet and a condenser, are added 100 parts by weight of monomer(s), 0.2 part by weight of azobisisobutyronitrile, and 200 parts by weight of ethyl acetate as a polymerization solvent, and the mixture is stirred for one hour under a nitrogen gas flow. After oxygen is removed in this way from the polymerization system, the mixture is heated to 63 °C and the reaction is carried out for 10 hours. Then, it is cooled to room temperature and a homopolymer solution having 33 % by weight solid content is obtained. Then, this homopolymer solution is applied onto a release film by flow coating and allowed to dry to prepare a test sample (a homopolymer sheet) of about 2 mm thickness. This test sample is cut out into a disc of 7.9 mm diameter and is placed between parallel plates; and while applying a shear strain at a frequency of 1 Hz using a rheometer (a TA Instruments product, ARES), the viscoelasticity is measured in the shear mode over a temperature range of-70 °C to 150 °C at a heating rate of 5 °C/min; and the temperature value at the maximum of the tan 8 (loss tangent) curve is taken as the glass transition temperature.

<PSA Composition>

The PSA layer in the art disclosed herein can be formed with a PSA composition that comprises monomeric components in a composition as described above as a polymerized product, in a non-polymerized form (i.e. in a form where the polymerizable functional groups are still unreacted), or as a mixture of these. The PSA composition may be in various forms such as a solvent-based PSA composition which comprises PSA (adhesive components) in an organic solvent; an aqueous PSA composition which comprises PSA dispersed in an aqueous solvent; an active energy ray-curable PSA composition prepared so as to form PSA when cured with active energy rays such as UV rays, radioactive rays, etc.; a hot melt-type PSA composition which is heated to melting for application and allowed to cool to around room temperature to form PSA; and the like.

Herein, the term "active energy ray" in this description refers to an energy ray having energy capable of causing a chemical reaction such as polymerization, crosslinking, initiator decomposition, etc. Examples of the active energy ray herein include lights such as ultraviolet (UV) rays, visible lights, infrared lights, radioactive rays such as $\alpha$ rays, $\beta$ rays, Y rays, electron beam, neutron radiation, X rays, etc.

The PSA composition typically comprises at least some of the monomeric components (possibly a certain species among the monomers or a fraction of its quantity) as a polymer. The polymerization method for forming the polymer is not particularly limited. Heretofore known various polymerization methods can be suitably used. For instance, thermal polymerization (typically carried out in the presence of a thermal polymerization initiator) such as solution polymerization, emulsion polymerization, bulk polymerization, etc.; photopolymerization carried out by irradiating light such as UV light, etc. (typically in the presence of a photopolymerization initiator); active energy ray polymerization carried out by irradiating radioactive rays such as β rays, Y rays, etc.; and the like. In particular, photopolymerization is preferable. In these polymerization methods, the embodiment of polymerization is not particularly limited. It can be carried out with a suitable selection of a heretofore known monomer supply method, polymerization conditions (temperature, time, pressure, irradiance of light, irradiance of radioactive rays, etc.), materials (polymerization initiator, surfactant, etc.) used besides the monomers, etc.

For the polymerization, depending on the polymerization method and embodiment of polymerization, etc., a known or commonly used photopolymerization initiator or thermal polymerization initiator can be used. These polymerization initiators can be used singly as one species or in a suitable combination of two or more species.

Examples of the photopolymerization initiator include, but not particularly limited to, ketal-based photopolymerization initiators, acetophenone-based photopolymerization initiators, benzoin ether-based photopolymerization initiators, acylphosphine oxide-based photopolymerization initiators, α-ketol-based photopolymerization initiators, aromatic sulfonyl chloride-based photopolymerization initiators, photoactive oxime-based photopolymerization initiators, benzoin-based photopolymerization initiators, benzil-based photopolymerization initiators, benzophenone-based photopolymerization initiators, thioxanthone-based photopolymerization initiators and the like.

Specific examples of ketal-based photopolymerization initiators include 2,2-dimethoxy-1,2-diphenylethane-1-one (e.g. trade name "IRGACURE 651" available from BASF Corporation), etc.

Specific examples of acetophenone-based photopolymerization initiators include 1-hydroxycyclohexyl phenyl ketone (e.g. trade name "IRGACURE 184" available from BASF Corporation), 4-phenoxydichloroacetophenone, 4-t-butyl-dichloroacetophenone, 1-[4-(2-hydroxyethoxy)-phenyl]-2-hydroxy2-methyl-1-propane-1-one (e.g. trade name "IRGACURE 2959" available from BASF Corporation), 2-hydroxy-2-methyl-1-phenyl-propane-1-one (e.g. trade name "DAROCUR 1173" available from BASF Corporation), methoxyacetophenone, etc.

Specific examples of benzoin ether-based photopolymerization initiators include benzoin ethers such as benzoin methyl ether, benzoin ethyl ether, benzoin propyl ether, benzoin isopropyl ether, benzoin isobutyl ether, etc., as well as substituted benzoin ethers such as anisole methyl ether, etc.

Specific examples of acylphosphine oxide-based photopolymerization initiators include bis(2,4,6-trimethylbenzoy)phenylphosphine oxide (e.g. trade name "IRGACURE 819" available from BASF Corporation), bis(2,4,6-trimethylbenzoyl)-2,4-di-n-butoxyphenylphosphine oxide, 2,4,6-trimethylbenzoyldiphenylphosphine oxide (e.g. trade name "LUCIRIN TPO" available from BASF Corporation), bis(2,6-dimethoxybenzoyl)-2,4,4-trimethylpentylphosphine oxide, etc.

Specific examples of α-ketol-based photopolymerization initiators include 2-methyl-2-hydroxypropiophenone, 1-[4-(2-hydroxyethyl)phenyl]-2-methylpropane-1-one, etc. Specific examples of aromatic sulfonyl chloride-based photopolymerization initiators include 2-naphthalenesulfonyl chloride, etc. Specific examples of photoactive oxime-based photopolymerization initiators include 1-phenyl-1,1-propanedione-2-(o-ethoxycarbonyl)-oxime, etc. Specific examples of benzoin-based photopolymerization initiators include benzoin, etc. Specific examples of benzil-based photopolymerization initiators include benzil, etc.

Specific examples of benzophenone-based photopolymerization initiators include benzophenone, benzoylbenzoic acid, 3,3'-dimethyl-4-methoxybenzophenone, polyvinylbenzophenone, α-hydroxycyclohexylphenylketone, etc.

Specific examples of thioxanthone-based photopolymerization initiators include thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, isopropylthioxanthone, 2,4-diisopropylthioxanthone, dodecylthioxanthone, etc.

The thermal polymerization initiator is not particularly limited. For example, can be used an azo-based polymerization initiator, peroxide-based polymerization initiator, a redox-based polymerization initiator by combination of a peroxide and a reducing agent, a substituted ethane-based polymerization initiator, etc. More specific examples include, but not limited to, azo-based initiators such as 2,2'-azobisisobutyronitrile, 2,2'-azobis(2-methylpropionamidine) disulfate, 2,2'-azobis(2-amidinopropane)dihydrochloride, 2,2'-azobis[2-(5-methyl-2-imidazolin-2-yl)propane] dihydrochloride, 2,2'-azobis(N,N'-dimethyleneisobutylamidine), 2,2'-azobis[N-(2-carboxyethyl)-2-methylpropionamidine] hydrate, etc.; persulfates such as potassium persulfate, ammonium persulfate, etc.; peroxide-based initiators such as benzoyl peroxide, t-butyl hydroperoxide, hydrogen peroxide, etc.; substituted ethane-based initiators such as phenyl-substituted ethane, etc.; redox-based initiators such as combination of a persulfate salt and sodium hydrogen sulfite, combination of a peroxide and sodium ascorbate, etc.; and the like. Thermal polymerization can be preferably carried out at a temperature of, for instance, about 20 °C to 100 °C (typically 40 °C to 80 °C).

Such thermal polymerization initiator or photopolymerization initiator can be used in a usual amount in accordance with the polymerization method, embodiment of polymerization, etc., and there are no particular limitations to the

amount. For instance, relative to 100 parts by weight of monomers to be polymerized, about 0.001 to 5 parts by weight (typically about 0.01 to 2 parts by weight, e.g. about 0.01 to 1 part by weight) of polymerization initiator can be used.

(PSA Composition Comprising Polymerized and Non-Polymerized (Unreacted) Monomeric Components)

The PSA composition according to a preferable embodiment comprises a polymerization product of a monomer mixture comprising at least some of the monomeric components (starting monomers) that constitute the composition. Typically, of the monomeric components, some are included as a polymerized product and the rest are included as unreacted monomers. The polymerization product of the monomer mixture can be prepared by polymerizing the monomer mixture at least partially.

The polymerization product is preferably a partially-polymerized product of the monomer mixture. Such a partially-polymerized product is a mixture of a polymer formed from the monomer mixture and unreacted monomers, and is typically in a form of syrup (viscous liquid). Hereinafter, a partially-polymerized product having such a form may be referred to as "monomer syrup" or simply "syrup."

The polymerization method for obtaining the polymerization product from the monomers is not particularly limited. A suitable method can be selected and employed among various polymerization methods as those described earlier. From the standpoint of the efficiency and convenience, a photopolymerization method can be preferably employed. According to a photopolymerization, depending on the polymerization conditions such as irradiation light quantity, etc., the polymer conversion of the monomer mixture can be easily controlled.

With respect to the partially-polymerized product, the monomer conversion of the monomer mixture is not particularly limited. The monomer conversion can be, for instance, about 70 % by weight or lower, or preferably about 60 % by weight or lower. From the standpoint of facile preparation of the PSA composition comprising the partially-polymerized product and ease of application, etc., the monomer conversion is usually suitably about 50 % by weight or lower, or preferably about 40 % by weight or lower (e.g. about 35 % by weight or lower). The lower limit of monomer conversion is not particularly limited. It is typically about 1 % by weight or higher, or usually suitably about 5 % by weight or higher.

The PSA composition comprising a partially-polymerized product of the monomer mixture can be easily obtained, for instance, by partially polymerizing a monomer mixture comprising all the starting monomers in accordance with a suitable polymerization method (e.g. photopolymerization). To the PSA composition comprising the partially-polymerized product, other components (e.g. photopolymerization initiator, polyfunctional monomer(s), crosslinking agent, acrylic oligomer described later, etc.) may be added as necessary. Methods for adding such other components are not particularly limited. For instance, they can be added to the monomer mixture in advance or added to the partially-polymerized product.

The PSA composition disclosed herein may also be in a form where a fully-polymerized product of a monomer mixture comprising certain species (starting monomers) among the monomeric components is dissolved in the rest of the monomers (unreacted) or a partially-polymerized product thereof. A PSA composition in such a form is also included in examples of the PSA composition comprising polymerized and non-polymerized (unreacted) monomeric components. As used herein, the term "fully-polymerized product" refers to a product whose monomer conversion is higher than 95 % by weight.

When forming PSA from a PSA composition comprising polymerized and non-polymerized monomeric components, a photopolymerization method can be preferably employed as the curing method (polymerization method). With respect to a PSA composition comprising a polymerization product prepared by a photopolymerization method, it is particularly preferable to employ photopolymerization as the curing method. A polymerization product obtained by photopolymerization already contains a photopolymerization initiator. When the PSA composition comprising the polymerization product is cured to form PSA, the photo-curing can be carried out without any additional photopolymerization initiator. Alternatively, the PSA composition may be obtained by adding a photopolymerization initiator as necessary to the polymerization product prepared by photopolymerization. The additional photopolymerization initiator may be the same as or different from the photopolymerization initiator used in preparing the polymerization product. If the PSA composition is prepared by a method other than photopolymerization, a photopolymerization initiator can be added to make it light-curable. The light-curable PSA composition is advantageous as it can readily form even a thick PSA layer. In a preferable embodiment, the PSA composition can be photopolymerized by UV irradiation to form a PSA. The UV irradiation may be performed using a commonly-known high-pressure mercury lamp, low-pressure mercury lamp, metal halide lamp, or the like.

(PSA Composition Comprising Monomeric Components in a Fully-Polymerized Form)

The PSA composition according to another preferable embodiment comprises the monomeric components as a fully-polymerized product. Such a PSA composition may be in a form of, for instance, a solvent-based composition which comprises in an organic solvent an acrylic polymer which is the fully-polymerized product of the monomeric

components, a water-dispersed composition such that the acrylic polymer is dispersed in an aqueous solvent, etc.

(Crosslinking Agent)

The PSA composition disclosed herein can comprise a crosslinking agent. For the crosslinking agent, a crosslinking agent known or commonly used in the PSA field can be used. Examples include epoxy-based crosslinking agents, isocyanate-based crosslinking agents, silicone-based crosslinking agents, oxazoline-based crosslinking agents, aziridine-based crosslinking agents, silane-based crosslinking agents, alkyletherified melamine-based crosslinking agent, metal chelate-based crosslinking agent, and the like. These can be used singly as one species or in combination of two or more species.

The crosslinking agent content (when two or more species of crosslinking agent are included, their combined amount) is not particularly limited. From the standpoint of obtaining a PSA having well-balanced adhesive properties such as adhesive strength, cohesive strength, etc., the crosslinking agent content is usually preferably about 5 parts by weight or less relative to 100 parts by weight of the monomeric components in the PSA composition, preferably about 0.001 to 5 parts by weight, more preferably about 0.001 to 4 parts by weight, or still more preferably about 0.001 to 3 parts by weight. Alternatively, the PSA composition may be free of such a crosslinking agent.

(Acrylic oligomer)

From the standpoint of increasing the adhesive strength, etc., the PSA composition disclosed herein can comprise an acrylic oligomer. For the acrylic oligomer, it is preferable to use a polymer having a higher Tg value than the Tg value of the copolymer corresponding to the composition of the monomeric components (which typically, approximately corresponds to the Tg value of the acrylic polymer contained in PSA formed from the PSA composition). The inclusion of the acrylic oligomer can increase the adhesive strength of the PSA.

The acrylic oligomer desirably has a Tg of about 0 °C to about 300 °C, preferably about 20 °C to about 300 °C, or more preferably about 40 °C to about 300 °C. When the Tg falls within these ranges, the adhesive strength can be preferably increased. The Tg value of the acrylic oligomer is determined by the Fox equation, similarly to the Tg of the copolymer corresponding to the composition of the monomeric components.

The acrylic oligomer may have a weight average molecular weight (Mw) of about 1,000 or larger, but smaller than about 30,000, preferably about 1,500 or larger, but smaller than about 20,000, or more preferably about 2,000 or larger, but smaller than about 10,000. A weight average molecular weight within these ranges is preferable in obtaining good adhesive strength and good holding properties. The weight average molecular weight of an acrylic oligomer can be determined by gel permeation chromatography (GPC) as a value based on standard polystyrene. More specifically, it can be determined with HPLC 8020 available from Tosoh Corporation, using two TSKgel GMH-H (20) columns and tetrahydrofuran as an eluent at a flow rate of about 0.5 ml/min.

Examples of monomers forming the acrylic oligomer include alkyl (meth)acrylate such as methyl (meth)acrylate, ethyl (meth)acrylate, propyl (meth)acrylate, isopropyl (meth)acrylate, butyl (meth)acrylate, isobutyl (meth)acrylate, sec-butyl (meth)acrylate, tert-butyl (meth)acrylate, pentyl (meth)acrylate, isopentyl (meth)acrylate, hexyl (meth)acrylate, 2-ethylhexyl (meth)acrylate, heptyl (meth)acrylate, octyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, and dodecyl (meth)acrylate; an ester of (meth)acrylic acid and an alicyclic alcohol, such as cyclohexyl (meth)acrylate, isobornyl (meth)acrylate, and dicyclopentanyl (meth)acrylate; aryl (meth)acrylate such as phenyl (meth)acrylate and benzyl (meth)acrylate; and a (meth)acrylate derived from a terpene compound derivative alcohol. These (meth)acrylates may be used solely as one species or in combination of two or more species.

From the standpoint of further increasing the adhesiveness, the acrylic oligomer preferably comprises, as a monomer unit, an acrylic monomer having a relatively bulky structure, typified by an alkyl (meth)acrylate having a branched alkyl group, such as isobutyl (meth)acrylate, tert-butyl (meth)acrylate, etc.; an ester of a (meth)acrylic acid and an alicyclic alcohol, such as cyclohexyl (meth)acrylate, isobornyl (meth)acrylate, dicyclopentanyl (meth)acrylate, etc.; or an aryl (meth)acrylate such as phenyl (meth)acrylate, benzyl (meth)acrylate, etc. When UV light is used in synthesizing the acrylic oligomer or forming the PSA layer, a saturated oligomer is preferable because it is less likely to inhibit polymerization. An alkyl (meth)acrylate having a branched alkyl group or an ester of an alicyclic alcohol is preferably used as a monomer constituting the acrylic oligomer.

From these points of view, preferable examples of the acrylic oligomer include the respective homopolymers of dicyclopentanyl methacrylate (DCPMA), cyclohexylmethacrylate (CHMA), isobornyl methacrylate (IBXMA), isobornyl acrylate (IBXA), dicyclopentanyl acrylate (DCPA), 1-adamanthyl methacrylate (ADMA), and 1-adamanthyl acrylate (ADA); as well as a copolymer of CHMA and isobutyl methacrylate (IBMA), a copolymer of CHMA and IBXMA, a copolymer of CHMA and acryloyl morpholine (ACMO), a copolymer of CHMA and diethylacrylamide (DEAA), a copolymer of ADA and methyl methacrylate (MMA), a copolymer of DCPMA and IBXMA, a copolymer of DCPMA and MMA, etc.

The acrylic oligomer content, if any, in the PSA composition is not particularly limited. From the standpoint of increasing the likelihood of obtaining a PSA layer that combines cohesion and other properties in a well-balanced manner, the acrylic oligomer content is preferably about 20 parts by weight or less relative to 100 parts by weight of the monomeric components in the PSA composition, more preferably about 15 parts by weight or less, or even more preferably about 10 parts by weight or less. The art disclosed herein can be implemented preferably also in an embodiment using no acrylic oligomers.

Besides these, the PSA composition disclosed herein may comprise various additives known in the PSA field as necessary. Depending on the application, suitable additives can be added, for example, colorant such as dye and pigment, antistatic agent, surfactant, plasticizer, tackifier resin, surface lubricant, leveling agent, softener, antioxidant, anti-aging agent, photostabilizer, UV absorber, polymerization inhibitor, inorganic or organic filler, meatal in a form of powder, particles or foil, etc.

In the art disclosed herein, as the PSA composition used for forming the PSA layer, an active energy ray-curable PSA composition (typically a light-curing PSA composition) can be preferably used. From the standpoint of the environmental hygiene, etc., a composition essentially free of an organic solvent is preferable. For instance, a PSA composition having about 5 % by weight or less (more preferably about 3 % by weight or less, e.g. about 0.5 % by weight or less) organic solvent content is preferable. A PSA composition essentially free of a solvent (meaning to include an organic solvent and an aqueous solvent) is preferable because it is suitable for forming a PSA layer by a method where a liquid layer of the PSA composition is cured between the faces A of the first and second films (i.e. at the A-A interface between the first and second films) as described later. For instance, a preferable PSA composition has a solvent content of about 5 % by weight or less (more preferably about 3 % by weight or less, e.g. about 0.5 % by weight or less). The solvent herein refers to a volatile component that should be eliminated in the process of forming the PSA layer, that is, a volatile component that is not to be a component of the final PSA layer formed.

<Laminate sheet>

The method for producing the laminate sheet disclosed herein is not particularly limited. For instance, the laminate sheet can be obtained by applying the PSA composition to the face A of the first or second film, allowing it to dry or cure to form a PSA layer, and layering the other film on the surface on the reverse side of the face A of the PSA layer. Alternatively, the laminate sheet can also be formed by allowing the PSA composition placed between the faces A of the first and second films to dry or cure to form a PSA layer. The PSA composition can be applied by various known methods. Specific examples include methods such as roll coating, kiss roll coating, gravure coating, reverse coating, roll brush coating, spray coating, dip roll coating, bar coating, knife coating, air knife coating, curtain coating, lip coating, and extrusion coating with a die coater or the like.

The laminate sheet disclosed herein can be preferably produced by a method that includes allowing a liquid layer of the PSA composition on a release face of a release film to dry or cure to form a PSA layer. This method allows more precise control of the smoothness of the PSA layer surface formed in contact with the release face by means of drying or curing a fluid PSA composition (liquid layer) in contact with the release face. As the release film, between the first and second films, the one whose face A is a release face can be used. The release face typically has surface roughness with a maximum height (Rz) of 400 nm or less. With the use of a release film having such a release face, highly smooth adhesive faces can be consistently (reproducibly) produced.

The laminate sheet disclosed herein can be preferably produced by a method that includes allowing a liquid layer of the PSA composition to cure between the faces A of the first and second films to form a PSA layer. As the method for placing the liquid layer of the PSA composition between the faces A of the first and second films, it is possible to use a method that applies the fluid PSA composition to the face A of the one film and then covers the liquid layer of the PSA composition with the other film. In another method cited, the first and second films are placed between a pair of rolls, with their faces A facing each other; and the fluid PSA composition is supplied between the faces A (i.e. supplied to the A-A interface). The PSA composition is applied preferably at or below 80 °C, or more preferably at or below 60 °C (e.g. at or below 40 °C). This can inhibit roughening of the PSA layer caused by a difference in coefficient of thermal expansion between the first/second release film and the PSA layer, allowing formation of-70 a yet smoother adhesive face.

The thickness of the PSA layer is not particularly limited. The PSA layer's thickness is, for instance, possibly about 1 μm to 500 μm, or usually suitably about 5 μm to 250 μm. In some embodiments, the PSA layer's thickness is, for instance, possibly 10 μm or greater, preferably 20 μm or greater, more preferably 25 μm or greater, or possibly even greater than 25 μm. With increasing thickness of the PSA layer, the PSA layer tends to have a higher ability to distribute stress. This can advantageously contribute to reduction of optical distortion. The art disclosed herein can be preferably implemented in an embodiment where the PSA layer has a thickness of, for instance, 30 μm or greater. The PSA layer's thickness can be 35 μm or greater, 40 μm or greater, or even 45 μm or greater. On the other hand, with increasing thickness of the PSA layer, the optical path in the PSA layer increases in length as well; and therefore, optical distortion is more likely to be noticed. Thus, in some embodiments, the PSA layer's thickness is suitably, for instance, 200 μm or

less, possibly 150 μm or less, 100 μm or less, or even 70 μm or less.

In the art disclosed herein, the PSA sheet (which includes the PSA layer and possibly a support substrate, but no release film) that constitutes the laminate sheet preferably has a haze value of 3 % or lower. Such a PSA sheet can be preferably used in various applications including an application that requires transparency. In the laminate sheet roll possibly used in optical applications (e.g. production of optical members), it is particularly significant that the PSA sheet has a haze value of 3 % or lower. In some embodiments, the haze value of the PSA sheet is preferably 0 % to 2.5 %, or more preferably 0 % to 2 %, for instance, possibly 0 % to 1.5 %, or even 0 % to 1 %. The haze value can be measured, using a haze meter, with the PSA sheet of interest applied onto one face of an alkali glass plate. As the haze meter, MR-100 available from Murakami Color Research Laboratory Co., Ltd., or an equivalent device can be used. For the measurement, the alkali glass plate with the PSA sheet applied thereon is arranged so that the PSA sheet is on the light source side. When the alkali glass itself has a haze value, the haze value of the alkali glass by itself is subtracted from the measured value to obtain the haze value of the PSA sheet. As the alkali glass plate, it is possible to use, for instance, a glass slide S1214 available from Matsunami Glass Ind., Ltd. The measurement is carried out in the same manner in Examples described later as well.

The haze value of the PSA layer is preferably 3 % or lower. The PSA sheet having such a PSA layer can be preferably used in various applications including optical applications. In some embodiments, the PSA layer's haze value is preferably 0 % to 2.5 %, more preferably 0 % to 2 %, possibly 0 % to 1.5 %, or even 0 % to 1 %. The art disclosed herein can be preferably implemented in an embodiment where the PSA layer has a haze value of 0 % or higher below 0.5 % (more preferably 0 % or higher and 0.4 % or lower, e.g. 0 % or higher and 0.3 % or lower). The PSA layer's haze value can be determined in the same manner as the PSA sheet's haze value except that the PSA layer of interest is applied to the one face of the alkali glass plate. It is noted that, in the laminate sheet where the first and second films are both release films, the PSA sheet constituting the laminate sheet consists of the PSA layer; and therefore, the PSA sheet's haze value equals the PSA layer's haze value.

The laminate sheet constituting the roll disclosed herein typically has a width of 5 mm or greater, for instance, possibly 10 mm or greater, preferably 20 mm or greater, more preferably 30 mm or greater, yet possibly 50 mm or greater, 150 mm or greater, 300 mm or greater, or even 500 mm or greater. In the laminate sheet roll, with increasing width of the laminate sheet, the occurrence of stress tends to be more likely due to insufficient slip properties between the faces B of the first and second films (i.e. at the B-B interface between the first and second films). Thus, it is particularly significant to prevent the occurrence of optical distortion in the PSA layer by applying the art disclosed herein. From the standpoint of the ease of handling the roll, etc., the laminate sheet's width is usually suitably about 5 m or less, for instance, possibly about 4 m or less, about 3 m or less, about 2 m or less, or even about 1 m or less.

The total thickness of the laminate sheet disclosed herein is not particularly limited. It can be, for instance, about 30 μm to 1500 μm. Here, the total thickness of the laminate sheet refers to the thickness from the first film's face B to the second film's face B. In some embodiments, the total thickness of the laminate sheet can be, for instance, 60 μm or greater, 80 μm or greater, 105 μm or greater, 125 μm or greater, or even 140 μm or greater. When a laminate sheet having a large total thickness is wound, the difference in circumference between the inside and outside of a rolled layer causes distortion which is likely to lead to occurrence of stress to shift the first film's face B in an in-plane direction relative to the second film's face B. According to the art disclosed herein, even when the laminate sheet has a large total thickness, the occurrence of optical distortion in the PSA layer can be effectively reduced. The total thickness of the laminate sheet can be, for instance, 1000 μm or less, 500 μm or less, or even 300 μm or less.

<Roll>

The present description provides a roll comprising the laminate sheet disclosed herein in a wound form. The roll typically includes a core (roll core) and a laminate sheet wound around the core. The shape of the core is not particularly limited. For instance, it may have a solid cylindrical shape, a hollow cylindrical shape (i.e. a tubular shape), a hollow or solid polygonal shape, etc. From the standpoint of facilitating the handling of the roll, a hollow cylindrical core or a hollow polygonal core can be preferably used. A cylindrical core is particularly preferable.

The material forming the core is not particularly limited and a known material can be used. Examples include paper such as cardboard; plastic materials such as PE resin, PP resin, vinyl chloride resin, polyester, epoxy resin, phenol resin, melamine resin, silicon resin, polyurethane, polycarbonate, and acrylonitrile-butadiene-styrene copolymer resin (ABS resin); composite materials such as fiber-reinforced plastic (FRP); and metal materials such as iron, stainless steel (SUS) and aluminum.

The core's outer diameter is not particularly limited. In some embodiments, the core may have an outer diameter of, for instance, 30 mm or greater, 50 mm or greater, 70 mm or greater, 80 mm or greater, or even 85 mm or greater. With increasing outer diameter of the core, the occurrence of optical distortion tends to be more easily inhibited in the PSA layer. On the other hand, in order to increase the productivity, etc., it is normally desirable to make the laminate sheet longer so as to reduce the frequency the rolls need to be replaced. To include a longer laminate sheet in the roll,

it is advantageous that the core has a smaller outer diameter. From such a standpoint, for instance, the core's outer diameter is preferably 300 mm or less, or it can be 250 mm or less, 200 mm or less, or even 180 mm or less. The art disclosed herein can be favorably implemented even in an embodiment of the roll having a core's outer diameter of 150 mm or less, 100 mm or less, or even 95 mm or less. Even in such an embodiment, the occurrence of optical distortion can be significantly inhibited in the PSA layer. When the roll core has a non-circular cross-sectional shape, the diameter of the core refers to the diameter of a circle approximating the cross-sectional shape.

In case of a hollow core, the wall thickness of the core is not particularly limited. It can be suitably selected so as to obtain desirable strength, considering the material and outer diameter of the core, etc. From the standpoint of reducing the weight of the roll, etc., the wall thickness of the core is usually suitably about 2 mm to 15 mm, or preferably about 3 mm to 10 mm.

<Applications>

According to the laminate sheet roll disclosed herein, the occurrence of optical distortion in the PSA layer in the laminate sheet can be reduced. For this feature, the roll can be preferably used in, for instance, optical applications. More specifically, the roll can be suitably used for manufacturing optical members having PSA layers (adhesive optical members), in an embodiment where the PSA sheet in the laminate sheet unwound from the roll is applied to the optical members. Of the roll, the PSA sheet in the laminate sheet can be preferably used as an adhesive optical member, as is or after processed into suitable size and shape, in an embodiment where at least one of the first and second films in the laminate sheet is an optical member having a non-releasable face A.

When using an optical film as the optical material, the adhesive optical member is used as an adhesive optical film. Examples of the optical film include a polarizing plate, retardation plate, optical compensation film, brightness enhancement film, hard coat (HC) film, anti-glare film, impact-absorbing film, anti-fouling film, photochromic film, light control film, wavelength-selective absorbing film, wavelength conversion film, a laminate of these, and the like. The PSA layer or PSA sheet in the laminate sheet disclosed herein is preferable also for applications in the ophthalmic field. The PSA layer or PSA sheet is not limited to optical applications or ophthalmic applications as described above. For instance, it can be applied for various purposes, in a form of a PSA sheet that uses a general antifouling film, thermal insulation film, impact-absorbing film, etc., as the support.

The matters disclosed in this description include the following:

(1) A roll of laminate sheet, wherein

the laminate sheet comprises a PSA layer, and first and second films laminated on first and second faces of the PSA layer,
at least one of the first and second films is a release film,
the release film has surface roughness with a maximum height (Rz) of 400 nm or less on the PSA layer side surface (face A), and
at least one of the first and second films has surface roughness with a maximum height (Rz) of 400 nm or greater on the surface (face B) opposite from the PSA layer (i.e. on the reverse side of the PSA layer side surface).

(2) The laminate sheet roll according to (1) above, wherein the first and second films have a total thickness of 70 μm or greater (e.g. 78 μm or greater).
(3) The laminate sheet roll according to (1) or (2) above, wherein the PSA layer has a thickness of 30 μm or greater.
(4) The laminate sheet roll according to any of (1) to (3) above, wherein the PSA layer is formed of an acrylic PSA.
(5) The laminate sheet roll according to (4) above, wherein the acrylic PSA comprises an acrylic polymer and the acrylic polymer has a glass transition temperature of -50 °C or above based on its monomer composition.
(6) The laminate sheet roll according to any of (1) to (5) above, wherein the Rz of the first film's surface (face IB) on the opposite side from the PSA layer differs by at least 50 nm (typically 50 nm or more and 5000 nm or less) from the Rz of the second film's surface (face 2B) on the opposite side from the PSA layer.
(7) The laminate sheet roll according to any of (1) to (6) above, wherein the first or second film (one of the two) is a support substrate whose PSA layer side surface is a non-release face and whose surface on the opposite side from the PSA layer has a Rz of 400 nm or less.
(8) The laminate sheet roll according to any of (1) to (7) above, wherein the first and second films are independently selected from the group consisting of polyester-based resin film, cellulose resin film, polyimide-based resin film and polyether sulfone-based resin film
(9) The laminate sheet roll according to any of (1) to (8) above, wherein the PSA layer is free of a substrate and has a monolayer structure.
(10) The laminate sheet roll according to any of (1) to (9) above, wherein the PSA layer is produced by curing an

active energy ray curable PSA composition.

(11) The laminate sheet roll according to any of (1) to (10) above, wherein the PSA sheet excluding the release film from the laminate sheet has a haze value of 3 % or lower.

(12) The laminate sheet roll according to any of (1) to (11) above, for use in producing an optical member having the PSA layer.

(13) The laminate sheet roll according to any of (1) to (11) above, wherein the first or second film (one of the two) is an optical member whose PSA layer side surface is a non-release face.

(14) The laminate sheet roll according to (13) above, wherein the optical member is an optical film.

EXAMPLES

Several working examples relating to the present invention are described below although the present invention is not to be limited to these examples.

<Preparation of PSA Composition>

Were mixed 40 parts by weight of n-butyl acrylate, 41 parts by weight of cyclohexyl acrylate, 19 parts by weight of 4-hydroxybutyl acrylate, and 0.05 part by weight of 2,2-dimethoxy-1,2-diphenylethane-1-one (available from BASF Corporation, trade name "IRGACURE 651") and 0.05 part by weight of 1-hydroxycyclohexyl phenyl ketone (available from BASF Corporation, trade name "IRGACURE 184") as photopolymerization initiators. The mixture was irradiated with UV rays in a nitrogen atmosphere to prepare a partially-polymerized product (monomer syrup). To the resulting monomer syrup, 0.3 part by weight of 1,6-hexanediol diacrylate was added and evenly mixed to prepare a PSA composition C1.

<Preparation of laminate sheet>

(Example 1)

As the first film, was obtained a 75 μm thick PET film (release film) whose face A (face 1A) to be laminated on the PSA layer's first face was a release face formed with a silicone-based release agent and had a Rz of 236 nm. In the release film, the face B (face 1B) on the reverse side of the face A had a Rz of 1750 nm.

As the second film, was obtained a 100 μm thick PET film (release film) whose face A (face 2A) to be laminated on the PSA layer's second face was a release face formed with a silicone-based release agent and had a Rz of 244 nm, and whose face B (face 2B) had a Rz of 260 nm. Both the faces 1B and 2B had untreated PET surfaces.

The PSA composition above was applied to the first film's face A (release face) to form a liquid layer of the PSA composition on the face A. The PSA composition was applied in an amount adjusted so that the PSA layer had a final thickness of 50 μm. Subsequently, the liquid layer was covered with the second film so that the second film's face A (release face) made contact with the liquid layer. By this, the liquid layer was blocked from oxygen. With the each face of the liquid layer of the PSA composition in contact with the face A of the first or second film, the resultant was irradiated with UV rays at an irradiance of 5 m W/$cm^2$ for 360 seconds using a chemical light lamp (available by Toshiba Corporation) to carry out polymerization and cure the liquid layer to form a PSA layer. A three-layer laminate sheet was thus obtained, formed of the PSA layer (i.e. the UV-cured product of the liquid layer) and first and second films laminated on first and second faces of the PSA layer.

The irradiance value was measured with an industrial UV checker (available from Topcon Corporation, trade name "UVR-T1" with light detector model number "UD-T36") with peak sensitivity at 350 nm in wavelength.

(Examples 2, 4 to 6)

In these Examples, as the first and second films, were used PET films (release films) having the thicknesses and Rz values shown in Table 1 with faces A being release faces formed with a silicone-based release agent. The faces B of the first and second films in each Example had untreated PET surfaces. Using these first and second films, but otherwise in the same manner as Example 1, were prepared laminate sheets according to Examples 2 and 4 to 6.

(Example 3)

In this Example, as the second film, was used a PET film having the thickness and surface roughness shown in Table 1 and whose faces A (2A) and B (2B) were both untreated. As the first film, was used a PET film (release film) having the thickness and Rz value shown in Table 1 and whose face A (1A) was a release face formed with a silicone-based release agent and whose face B (1B) was untreated.

The PSA composition was applied to the face A (non-releasable surface) of the second film (support substrate) to form a liquid layer of the PSA composition on the face A. Otherwise in the same manner as Example 1, was prepared a laminate sheet according to this Example.

With respect to the first and second films used in the respective Examples, the maximum heights (Rz) of the faces A and B were determined as follows:

(Face A)

In an environment at 23 °C and 50 % RH, a drop of water was placed on a glass slide S1214 (available from Matsunami Glass Ind., Ltd.) and the film of interest was placed over the water drop with the face B on the glass slide side to arrange the film's face B in tight contact with the glass slide.

Subsequently, the maximum height (Rz) of the film's face A arranged on the glass slide was determined with an interferometric surface roughness analyzer (available from Veeco, Wyko NT-9100). The measurement conditions are shown below.

- Surface area measure per run: 622 μm × 467 μm
  (Object lens: ×10, FOV (internal lens): ×1.0)
- Measurement mode: VSI (vertical scan interferometry)
- Back scan: 5 μm
- Distance measured: 10 μm
- Threshold: 0.1 %
- Scanning speed: × 1 (single scan)

From the data set obtained by the measurement, were determined the height Rp of the highest peak above the mean line of the roughness curve and the depth Rv of the deepest valley below the mean line. The sum of the Rp and Rv values was used as the maximum height (Rz). The measurement was carried out five times (i.e. N = 5) and their average value was determined.

(Face B)

The film of interest was placed over a drop of water placed on the glass slide with the face A on the glass slide side to arrange the film's face A in tight contact with the glass slide. Otherwise in the same manner as the measurement of the maximum height (Rz) of the face A, was determined the maximum height (Rz) of the face B.

<Preparation of laminate sheet roll>

The laminate sheet according to each Example was prepared, using long strips of 1000 mm wide film as the first and second films and applying the PSA composition to a central area (about 930 mm wide) of the first film's width. With respect to the laminate sheet according to each Example, the lengthwise edges (two edges of the width) were cut off within the width of the PSA layer formed from the PSA composition to prepare a 300 mm wide and about 30 m long sample for roll preparation.

Was obtained a cylindrical core of 90.2 mm in outer circumference, 76.2 mm in inner circumference and 305 mm in core length. One end (start end of winding) of the length of each sample for roll preparation was fixed with a commercial PSA tape to the lateral area of the core with the second film side of the sample on the inside; and the rest of the sample was wound around the core at a winding tension of about 200 N/m to prepare a roll. The other end (finish end of winding) of the sample's length was fixed with a commercial PSA tape to the sample's outer surface (first film's face B) located at the inner circumference.

<Optical distortion after storage of roll>

After the roll prepared above was stored in a room at 30 °C for 28 days, the sample for roll preparation was cut around 10 m from the start end of winding to a 300 mm by 1000 mm size to obtain an optical distortion test sample.

The optical distortion test sample (laminate sheet having a first film/PSA layer/second film structure) was held flat and placed between a point light source and a screen at an angle of approximately 45° relative to the light beam from the point light source with the sample's second film side on the point light source side. As the point light source, was used a xenon lamp C2577 available from Hamamatsu Photonics K.K. The distance between the point light source and the screen was about 100 cm. The sample was placed around the midpoint of the distance.

The point light source was turned on and the image projected through the sample on the screen was visually inspected to evaluate the presence and degree of optical distortion based on the three grades described below. The results are shown in Table 1. The optical distortion was evaluated in an environment at 23 °C and 50 %RH at about 5 minutes after the optical distortion test sample was collected from the post-storage roll.

E: No optical distortion observed
A: Some optical distortion observed, but an acceptable level for practical use
P: Obvious optical distortion observed

<Smoothness of adhesive face>

From each roll prepared above, was collected a smoothness test sample. In the same manner as the measurement of maximum height (Rz) for the faces A and B of the first and second films, the maximum height (Rz) of the PSA layer surface was measured to evaluate the smoothness of the adhesive face. In particular, the sample for roll preparation was cut around 10 m from the start end of winding to a 20 mm by 50 mm size to obtain a smoothness test sample. From the sample, the first film was removed to expose the adhesive face; the sample was placed on a drop of water on a glass slide S1214 (available from Matsunami Glass Ind., Ltd.) so that the second film side was in tight contact with the glass slide; and the maximum height (Rz) of the adhesive face (first face) was determined under the conditions described above. In addition, with respect to each of Examples 1, 2 and 4 to 6, the first film was removed from the smoothness test sample and the sample was applied to the glass slide; subsequently, the second film was removed from the sample and the exposed adhesive face (second face) was subjected to measurement of maximum height (Rz) under the aforementioned conditions. As a result, when both the first and second adhesive faces had maximum heights (Rz) less than 400 nm, the adhesive face's smoothness was graded "E" (excellent in smoothness). When at least one adhesive face (the first face in Example 3) of the first and second faces had a maximum height (Rz) of 800 nm or greater, the adhesive face's smoothness was graded "P" (poor in smoothness).

[Table 1]

Table 1

| | | Example 1 | Example 2 | Example 3 | Example 4 | Example 5 | Example 6 |
|---|---|---|---|---|---|---|---|
| Laminate sheet | Rz of face 1B | 1750 nm | 650 nm | 650 nm | 650 nm | 301 nm | 1430 nm |
| | Thickness of-70 1st film | 75 μm | 31 μm | 31 μm | 31 μm | 75 μm | 75 μm |
| | Rz of face 1A | 236 nm | 138 nm | 138 nm | 138 nm | 269 nm | 1290 nm |
| | Thickness of PSA layer | 50 μm | 50 μm | 50 μm | 50 μm | 50 μm | 50 μm |
| | Rz of face 2A | 244 nm | 241 nm | 299 nm | 138 nm | 266 nm | 269 nm |
| | Thickness of 2nd film | 100 μm | 75 μm | 50 μm (non-releasable) | 31 μm | 75 μm | 75 μm |
| | Rz of face 2B | 260 nm | 255 nm | 311 nm | 650 nm | 299 nm | 301 nm |
| Total thickness of-70 films | | 175 μm | 106 μm | 81 μm | 62 μm | 150 μm | 150 μm |
| Evaluation results | Smoothness of adhesive face | E | E | E | E | E | P |
| | Optical distortion after stored in roll | E | E | E | A | P | E |

As shown in Table 1, with respect to the laminate sheets of Examples 1 to 4 wherein at least one of the first film's face B (1B) and the second film's face B (2B) had a Rz of 400 nm or greater, the optical distortion of the PSA layer after stored in the rolled state was clearly reduced as compared to the laminate sheet of Example 5 wherein both the faces 1B and 2B had Rz values less than 400 nm. Examples 1 to 3 showed particularly great results. In comparison to

the laminate sheet of Example 6 wherein the face A of the first film (release film) had a Rz of 1430 nm, the laminate sheets of Examples 1 to 4 had highly smooth adhesive faces, with the release film's face A having a Rz of 400 nm or less in each of these Examples. It is noted that when the haze values of the PSA sheets (consisting of the PSA layers) of Examples 1, 2 and 4 to 6 were determined by the aforementioned method, Examples 1, 2, 4 and 5 all had 0.2 and Example 6 had 0.5. The PSA sheet (substrate-supported single-faced PSA sheet) of Example 3 had a haze value of 1.1.

Although specific embodiments of the present invention have been described in detail above, these are merely for illustrations and do not limit the scope of the claims. The art according to the claims includes various modifications and changes made to the specific embodiments illustrated above.

[Reference Signs List]

10 PSA layer
10a first face (adhesive face)
10b second face (adhesive face)
21 first film (release film)
21a face A (release face)
21b face B
22 second film (release film)
22a face A (release face)
22b face B
32 second film (support substrate)
32a face A (non-release face)
32b face B
50 core
100 roll
110 PSA sheet
120 laminate sheet
200 roll
210 PSA sheet
220 laminate sheet

## Claims

1. A roll of laminate sheet, wherein
the laminate sheet comprises a pressure-sensitive adhesive layer, a first film laminated on a first face of the pressure-sensitive adhesive layer, and a second film laminated on a second face of the pressure-sensitive adhesive layer,
at least one of the first and second films is a release film,
the release film has surface roughness with a maximum height (Rz) of 400 nm or less on the pressure-sensitive adhesive layer side surface, and
at least one of the first and second films has surface roughness with a maximum height (Rz) of 400 nm or greater on the surface opposite from the pressure-sensitive adhesive layer.

2. The laminate sheet roll according to Claim 1, wherein the first and second films have a total thickness of 70 μm or greater.

3. The laminate sheet roll according to Claim 1 or 2, wherein the pressure-sensitive adhesive layer has a thickness of 30 μm or greater.

4. The laminate sheet roll according to any one of Claims 1 to 3, wherein the pressure-sensitive adhesive layer is formed of an acrylic pressure-sensitive adhesive.

5. The laminate sheet roll according to Claim 4, wherein
the acrylic pressure-sensitive adhesive comprises an acrylic polymer, and
the acrylic polymer has a glass transition temperature of -50 °C or above based on its monomer composition.

6. The laminate sheet roll according to any one of Claims 1 to 5, for use in producing an optical member having the pressure-sensitive adhesive layer.

[Fig. 1]

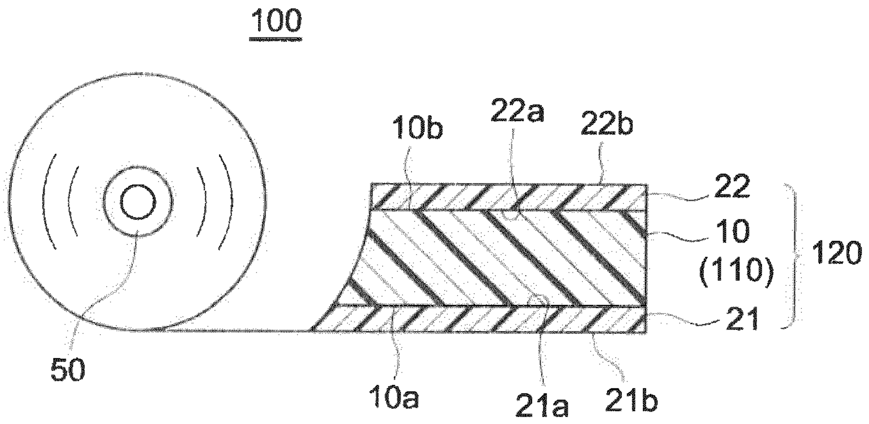
100
10b
22a
22b
22
10
(110)
120
21
50
10a
21a
21b

[Fig. 2]

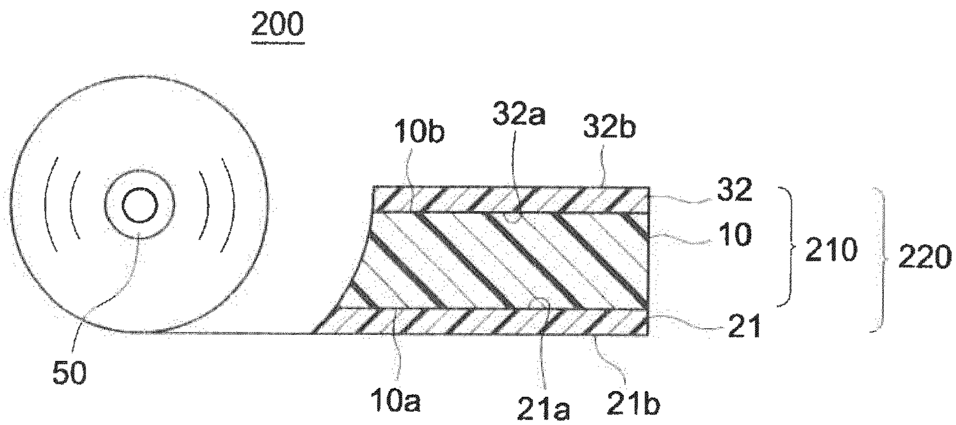
200
10b
32a
32b
32
10
210
220
21
50
10a
21a
21b

Europäisches Patentamt
European Patent Office
Office européen des brevets

# EUROPEAN SEARCH REPORT

Application Number
EP 20 15 7673

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE WPI<br>Week 201467<br>2 October 2014 (2014-10-02)<br>Thomson Scientific, London, GB;<br>AN 2014-S06472<br>XP002799708,<br>-& WO 2014/157445 A1 (LINTEC CORP)<br>2 October 2014 (2014-10-02)<br>* abstract *<br>----- | 1-6 | INV.<br>C09J7/10<br>C09J7/38<br>C09J7/40 |
| T | Rodney J. Andrews ET AL: "Glass Transition Temperatures of Polymers"<br>In: "Polymer Handbook (4th Edition)",<br>1 January 1999 (1999-01-01), John Wiley & Sons, XP055207302,<br>ISBN: 978-0-47-116628-3<br>vol. 7, pages VI-193,<br>* the whole document *<br>----- | 1-6 | |

| TECHNICAL FIELDS SEARCHED (IPC) |
|---|
| C09J |

The present search report has been drawn up for all claims

2

| Place of search | Date of completion of the search | Examiner |
|---|---|---|
| Munich | 13 July 2020 | Fodor, Csaba |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 20 15 7673

This annex lists the patent family members relating to the patent documents cited in the above-mentioned European search report. The members are as contained in the European Patent Office EDP file on
The European Patent Office is in no way liable for these particulars which are merely given for the purpose of information.

13-07-2020

| Patent document cited in search report | Publication date | Patent family member(s) | Publication date |
|---|---|---|---|
| WO 2014157445 A1 | 02-10-2014 | CN 105008478 A | 28-10-2015 |
| | | JP 6300788 B2 | 28-03-2018 |
| | | JP WO2014157445 A1 | 16-02-2017 |
| | | KR 20150135356 A | 02-12-2015 |
| | | TW 201437320 A | 01-10-2014 |
| | | WO 2014157445 A1 | 02-10-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6300788 B
- JP 2007051271 A


### Non-patent literature cited in the description


- **C. A. DAHLQUIST.** Adhesion : Fundamental and Practice. McLaren & Sons, 1966, 143
- Polymer Handbook. John Wiley & Sons, Inc, 1989